# EUROPÄISCHE PATENTSCHRIFT

(11) **EP 0 578 096 B1**
(45) Veröffentlichungstag und Bekanntmachung des Hinweises auf die Patenterteilung: **03.05.2000**
(21) Anmeldenummer: 93110313.9
(22) Anmeldetag: 29.06.1993
(51) Int. Cl.: B23K 31/02, B23K 1/20, G01K 5/32

(54) **Verbindung zwischen Bauteilen, insbesondere Kapillar-Rohr und Fühler-Rohr**
Connection between piece parts, particularly between capillary tube and sensing tube
Jonction entre des éléments, en particulier entre un tube capillaire et un tube de détecteur

(30) Priorität: 04.07.1992 DE 4222065
(43) Veröffentlichungstag der Anmeldung: 12.01.1994
(73) Patentinhaber: E.G.O. Italiana S.p.A., I-28100 Novara/Veveri (IT)
(72) Erfinder: Agradi, Guglielmo, I-28100 Novara (IT)
(74) Vertreter: Patentanwälte Ruff, Beier, Schöndorf und Mütschele

(56) Entgegenhaltungen:
- AT-B- 204 865
- DE-B- 2 414 812
- DE-C- 2 917 335
- US-A- 4 509 880

## Beschreibung

Die Erfindung betrifft eine Verbindung nach dem Oberbegriff des Patentanspruches 1 (Siehe DE-B-24 14 812). Sie kann eine Lötverbindung zwischen Bauteilen sein, die bevorzugt für Querschnittsweiten unter 20 bzw. 10 mm und kleiner geeignet sein soll, nämlich z.B. für eine Weite der Lötverbindung, die in der Größenordnung von 1 mm oder einem ganzzahligen Vielfachen davon liegt. Solche Verbindungen sollen insbesondere zur druckdichten und mechanischen Befestigung eines Endes eines Kapillar-Rohres aus rostfreiem Stahl an einem Ende eines Fühler-Rohres oder an der Anschlußstelle einer Membran-Druckdose eines Temperaturfühlers dienen, der zu einem geschlossenen hydraulischen Ausehnungssystem gehört und z.B. für die hydraulisch-mechanische Betätigung mindestens eines Schaltkontaktes eines Temperaturreglers für Wärmegeräte oder dgl. geeignet ist.

Nach der DE-C 2 917 335 ist zusätzlich zu den beiden Enden der Bauteile noch eine äußere oder innere Hülse vorgesehen, welche in vorteilhafter Weise eine Verstärkung der Lötverbindung mit sich bringt und einen vorteilhaften Knickschutz für das Kapillar-Rohr ermöglicht. Derartige Bauteile haben Wandungsdicken in der Größenordnung von höchstens 1 mm bzw. wesentlich darunter, nämlich unter 1/2 mm bis zu etwa 1/4 mm und sind daher sehr empfindlich. Desweiteren muß die Lötverbindung zuverlässig dicht, über sehr lange Gebrauchszeit standfest und außerdem so ausgebildet sein, daß nicht versehentlich ein Verschluß des Kapillar-Rohres erfolgt.

Je feiner bzw. kleiner die Bauteile sind, um so schwieriger ist ihr Zusammenstecken vor Herstellung der Haft- bzw. Lötverbindung, wobei insbesondere ihre zusammenführenden Endflächen meist scharfe bzw. stumpfe und zur Steckrichtung rechtwinklige Schnittflächen sind, die sich bei der Herstellung des jeweiligen Bauteiles ergeben. Da die Spaltbreite des Haftspaltes zur Erzielung einer möglichst starken Kapillar- bzw. Kreichwirkung für das Haftmittel höchstens etwa 0,05 bis 0,2 mm oder sogar darunter, nämlich etwa 0,02 bis 0,03 mm betragen soll, steht für das Einfädeln beim Zusammenstecken praktisch kein nennenswertes Radialspiel zur Verfügung, so daß die stumpfen Endflächen leicht aneinander stoßen, sich gegeneinander verhaken oder nach Erreichen einer ersten geringen Stecktiefe durch Schräglagen Verklemmungen eintreten. Dies kann das maschinell automatisierte Zusammensetzen der Bauteile erschweren und die mit wesentlich größerer Feinfühligkeit mögliche Handarbeit hierfür erforderlich machen.

Die DE-B-2 414 812 zeigt die Verbindung zweier Rohre deren beide End- bzw. Stirnflächen abgeschrägt sind, so daß sich kein Trichtereffekt beim Zusammenstecken ergibt.

Die AT-B-204 865 zeigt zur Aufnahme eines Rohres in einem Bauteil eine Einführöffnung, die durch Stanzen hergestellt ist, auf ihrer gesamten Länge konstante Weite hat und auf einem Teil ihrer Länge durch Lötmaterial begrenzt ist.

Die US-A-4 509 884 zeigt die Verbindung zwischen einem Glasrohr und einer Muffe, deren Enden in dem Bereich, in welchem sie ineinander greifen konstante Querschnitte haben.

Der Erfindung liegt die Aufgabe zugrunde, eine Verbindung zu schaffen, bei welcher Nachteile bekannter Ausbildungen bzw. der beschriebenen Art vermieden sind und die insbesondere ein einfaches Zusammenfügen der zur Herstellung der Verbindung erforderlichen Bauteile bzw. Substanzen gewährleistet, wobei vorzugsweise eine möglichst einfache Bauweise erzielt werden soll.

Erfindungsgemäß sind die Merkmale nach Patentanspruch 1 vorgesehen. Mindestens eine Einfädel- und/oder Führungshilfe kann eine unmittelbare gegenseitige und zentrierende Ausrichtung der Bauteile beim Zusammenführen so ermöglichen, daß das innere Ende durch diese Hilfe im wesentlichen bis zum Erreichen der Verbindungsfläche des äußeren Endes stetig zunehmend genauer gegenüber diesem äußeren Ende ausgerichtet und zentriert wird. Statt mit einer gesonderten und nicht an der fertigen Verbindung verbleibenden Einfädelhilfe kann dies in besonders einfacher Weise dadurch erreicht werden, daß das äußere Ende eine oder mehrere Schrägflachen als Gleit- und Auflaufflächen für die Endfläche des inneren Endes aufweist und/oder daß das innere Ende mindestens eine solche Schrägfläche für die gleitende Verschiebung gegenüber dem äußeren Ende aufweist. Die zuletzt genannte Schrägfläche ist zweckmäßig durch eine Endfläche des inneren Endes gebildet, so daß sie beim Zusammenstecken als Erstes das äußere Bauteil berührt.

Weisen beide Bauteile im wesentlichen komplementäre Schrägflächen auf, so wird das Einfädeln noch weiter erleichtert. Die Einfädelhilfe ist zweckmäßig so ausgebildet, daß die beiden Bauteile beim ersten Eingriff das größte Radialspiel zueinander haben und dieses Radialspiel dann proportional, progressiv und/oder degressiv mit zunehmender Eingriffstiefe bis auf dasjenige Maß abnimmt, das sich durch die Lötspaltbreite ergibt. Besonders zweckmäßig ist es, wenn die Abnahme des Radialspieles in einer ersten Einsteckphase progressiv, dann in einer längsten Hauptphase proportional und schließlich in einer Endphase degressiv abnimmt, wodurch auch die Arbeitsgeschwindigkeit beim Zusammenfügen erhöt werden kann. Die erfindungsgemäße Ausbildung eignet sich auch für die Verbindung mindestens eines äußeren Bauteiles mit zwei oder mehr inneren Bauteilen bzw. wenigstens eines inneren Bauteiles mit zwei oder mehr äußeren Bauteilen, wobei gesonderte oder ineinander übergehende Lötverbindungen gleich und/oder unterschiedich ausgebildet sein können. Die zu verbindenden Bauteile bzw. deren Haftflächen bestehen vorteilhaft aus rostfreiem Stahl und die Verbindung wird zweckmäßig mit einem Hartlot, z. B. einem Chrom-Nickel-Lot, oder einem anderen fließfähigen bzw. härtbaren Haftmittel hergestellt. Als Haft- oder Lötmittel kann dabei eine Paste, wie eine Lötpaste verwendet werden, die Zunächst in den Bereich des Verbindungsspaltes bzw. zum größten Teil an ein von außen leicht zugängliches Ende dieses Spaltes gebracht wird, wonach alle Bauteile, z. B. in einem Durchlauf-Lötofen, auf bzw. über die Arbeitstemperatur des Haftmittels erwärmt werden, so daß das geschmolzene Haftmittel aufgrund von Kapillarwirkung in den Verbindungspalt kriecht und nach Erkalten bzw. Aushärten die hinsichtlich Fluiddrücken dichte und mechanisch hochfeste sowie temperaturbeständige Verbindung bildet.

Die das Zusammenstecken der Bauteil erleichternden Profilierungen können an mindestens einem Bauteil, insbesondere am äußeren Bauteil ohne jede spanabhebende Bearbeitung z. B. dadurch hergestellt werden, daß der äußere Bauteil vom Außenumfang her gegen eine eingesetzte Matrize kaltverformt und dadurch in diesem Bereich im Gefüge verdichtet wird. Dadurch ergeben sich hochglatte Schräg-, Löt- bzw. Übergangsflächen, die das Gleiten und damit das widerstandsarme Ausrichten der Bauteile gegeneinander beim Zusammenstecken wesentlich erleichtern.

Die Herstellung der Verbindung erfolgt erfindungsgemäß nach einem Verfahren, bei welchem die beiden Bauteile während des Zusammensteckens nach und nach in der beschriebenen Weise zunehmend koaxial zueinander ausgerichtet werden. Vorzugsweise hält dabei ein bewegbarer Greifer den einen Bauteil, während der andere Bauteil in einem stehenden Greifer gehalten ist. Mindestens ein Greifer erlaubt freie Querbewegungen des zugehörigen Bauteiles quer zur Steckrichtung, zumindest innerhalb desjenigen Radialmaßes, um welches die beiden Bauteile beim Einfädeln maximal gegeneinander auszurichten sind, so daß dieser Greifer aufgrund der Wirkung der Einfädelhilfe während seiner fortschreitenden Einsteckbewegung mit dem zugehörigen Bauteil entsprechend ausgerichtet wird.

Das Lötmittel wird zweckmäßig vor dem Zusammenstecken am inneren Bauteil, und zwar nur in einem größeren Abstand von dessen in Steckrichtung vorderen, offenen Ende haftend angebracht, so daß dieser Bauteil synchron mit der Bewegung das Lötmittel in den Bereich des späteren Lötspaltes transportiert und dort durch Abstreifen am äußeren Bauteil im wesentlichen im Bereich des zugehörigen Endes des Lötspaltes ablagert. Ein geringer Anteil des Lötmittels kann dabei als hauchdünner Film bzw. Schmierfilm während der Steckbewegung auch bereits bis in die Lötfläche des äußeren Bauteiles vordringen. Da sich das abgelagerte Haft- bzw. Lötmittel in einem Bereich befindet, der nur an einen einzigen Kapillarspalt, nämlich den Lötspalt, anschließt, neigt es bei Überführung in die Lötschmelze bzw. im flüssigen Zustand nicht dazu, in andere Bereiche zu kriechen und diese in irgend einer Weise zu verschmutzen.

Des weiteren kann durch die gezielt gleich- bzw. regelmäßig zugeführte Ablagerung aus Lötmasse eine wesentlich geringere Menge Lötmittel verwendet werden, als wenn das Lötmittel nur von einer Stelle des Umfanges oder von mehreren über den Umfang verteilten Stellen zugeführt werden kann. Da die Menge der zugeführten Verbindungs- oder Lötmasse sehr nahe an diejenige Menge angepaßt werden kann, die im Bereich des Verbindungsspaltes tatsächlich die Verbindung bildet, müssen auch keine Vorkehrungen getroffen werden, um während des fließfähigen bzw. Schmelzzustandes der Masse ein Abfließen überflüssigen Verbindungsmittels zu ermöglichen. Daher sind für die zu verbindende bzw. verlötende Baueinheit im Lötofen oder dgl. keine gesonderten Auflagen erforderlich, welche z. B. der Lageausrichtung der Baueinheiten dienen, sondern diese können in beliebiger Ausrichtung bzw. Schichtung in diesem Prozeßraum angeordnet werden.

Diese und weitere Merkmale gehen außer aus den Ansprüchen auch aus der Beschreibung und den Zeichnungen hervor. Ausführungsbeispiele der Erfindung sind in den Zeichnungen dargestellt und werden im folgenden näher erläutert. In den Zeichnungen zeigen:
- Fig. 1: eine mit einer erfindungsgemäßen Verbindung versehene Baueinheit in Ansicht,
- Fig. 2: einen Ausschnitt der Fig. 1 im vergrößerten Axialschnitt sowie in einer ersten Phase der Herstellung der Verbindung und
- Fig. 3: ein weiteres Ausführungsbeispiel eines äußeren Endes im vergrößerten Axialschnitt.

Eine oder mehrere Verbindungen 1 sind zum Anschluß eines oder mehreren äußerer Bauteile 2 an einem oder mehreren inneren Bauteilen 3, nämlich einem Fühlerrohr zwischen etwa 3 bis 6 mm Außendurchmesser sowie einer Wandungsstärke von etwa 0,25 mm und einem Kapillar-Rohr vorgesehen, das einen Außendurchmesser von höchstens 1 mm und ebenfalls eine Wandungsstärke von etwa 0,25 mm haben kann. Der Außendurchmesser des Bauteiles 3 ist somit wesentlich kleiner als bzw. nur etwa 1/3 so groß wie der Innendurchmesser, den der Bauteil 2 über den größten Teil seiner Länge bzw. beiderseits der eigentlichen Lötstelle hat.

Die beiden Bauteile 2, 3 bilden komplementäre Steckglieder, die nahezu radialspielfrei mit ihren Enden, nämlich einem äußeren Ende 4 des Bauteiles 2 und einem inneren Ende 5 des Bauteils 3 ineinander gesteckt werden können und dann so ineinander greifen, daß das Ende 5 auf einer Länge in dem Ende 4 liegt, die dem 5- bis 30-fachen, vorzugsweise etwa dem 15-fachen der äußeren Querschnittsweite des Endes 5 entspricht, wobei vom 5- zum 30-fachen oder darüber jedes ganzzahlige weitere Mehrfache denkbar ist.

Hier dient die Lötverbindung 1 zum druckdichten Schließen eines vormontierten Temperaturfühlers 6, der dann eine in sich geschlossene Baueinheit bildet, welche am einen Ende des Kapillar-Rohres einen durch den Bauteil 2 gebildeten Fühlteil und am anderen Ende des Kapillar-Rohres einen mit diesem leitungsverbundenen Betätigungsteil 8 in Form einer Membrandose aufweist, die an voneinander abgekehrten Stirnflächen Druckflächen 9 zur Betätigung eines Schalters durch axiale Ausdehnung trägt. Das Kapillar-Rohr ist etwa radial an einen Anschlußstutzen des Betätigungsteiles 8 angeschlossen und auch diese Verbindung kann durch eine Lötverbindung nach der Erfindung gebildet sein. Das Kapillar-Rohr geht zwischen dem Ende 5 und dem Betätigungsteil 8 einteilig und mit konstanten Querschnitten durch.

Im verbundenen Zustand liegen die Enden 4, 5 und auch zweckmäßig der übrige Bauteil 2 in einer gemeinsamen, zu ihren Längserstreckungen parallelen mittleren Achse 10. Die einzige Richtung, in welche die beiden Bauteile 2, 3 annähernd linear und ggf. unter gegenseitiger Verdrehung zusammengesteckt werden können, liegt parallel zur Achse 10 und ist, bezogen auf das Ende 5, mit Pfeil 11 angegeben. Bezogen auf den Bauteil 2 liegt die Steckrichtung entgegengesetzt.

Der Bauteil 2 bildet über seine gesamte Länge durchgehend eine Hüll- bzw. Innenfläche 12 und eine entsprechende Hüll- bzw. Außenfläche 13, die über den größten Teil der Länge des Bauteiles 2 zylindrisch sein können. Im Bereich des Endes 4 ist die Innenfläche 12 als regelmäßig zylindrische, jedoch gegenüber allen übrigen Innenflächen des Endes 4 engere Lötfläche 14 vorgesehen. Die Weite dieser, über den Umfang und ihre Länge durchgehend geschlossene Lötfläche 14 ist um etwa 1/3 bis 2/3 kleiner als die Weite der übrigen Innenfläche 12 und beträgt zweckmäßig das 0,4-fache dieser übrigen Innenweite. Gegenüber der Außenweite des Endes 5 bzw. von dessen Lötfläche 15 ist die Lötfläche 14 um etwa 4 bis 6/100 mm weiter, so daß sich zwischen den beiden Bauteilen 2, 3 ein annähernd spielfreier Schiebesitz ergibt, insbesondere wenn das Ende 5 nicht streng geradlinig, sondern ggf. mit einer leichten Krümmung versehen ist, so daß nach dem Zusammenstecken die beiden Bauteile bereits reibungsschlüssig gegeneinander festgelegt sind. Die durch den Außenumfang des Endes 5 gebildete Lötfläche 15 des Bauteiles 3 liegt in einem Abstand von dessen zugehöriger Endfläche, der dem 3- bis 15-fachen, insbesondere etwa dem 10-fachen seiner Außenweite entspricht und ab dem 3-fachen jedes ganzzahlige Mehrfache haben kann. Dadurch ist die vom Kapillar-Kanal durchsetzte Endfläche vor Eindringen von Lötmittel geschützt.

Bezogen auf die Steckrichtung Pfeil 11 ist der Lötfläche 14 eine trichterförmige Schrägfläche 16 vorgesetzt, die unmittelbar durch dieselbe Innenfläche 12 wie die Lötfläche 14 gebildet und kegelstumpfförmig mit einem Kegelwinkel von etwa 90° ist. Auch diese Schrägfläche 16 ist über ihren gesamten Umfang und ihre Länge durchgehend geschlossen. Am Anfang der im Axialschnitt geradlinigen Schrägfläche 16 schließt an diese eine annähernd kugelkalottenförmig konkave Ringzone bzw. Ausrundung an, die im Axialschnitt weniger als viertelkreisförmig gekrümmt ist und stetig bzw. tangential sowie absatzfrei glatt in die Schrägfläche 16 übergeht. Mit einer entsprechenden, jedoch im Axialschnitt konvexen Abrundung 19 geht die Schrägfläche 16 unmittelbar in die Lötfläche 14 über, wobei beide Enden der Abrundung 19 tangential bzw. glattflächig und absatzfrei einerseits an die Schrägfläche 16 und andererseits an die Lötfläche 14 anschließen. Der Krümmungsradius der Ausrundung 18 kann etwa um die Wandungsdicke kleiner als der Krümmungsradius der Abrundung 19 sein und liegt zweckmäßig in der Größenordnung des Doppelten dieser Wandungsdicke bzw. in der Größenordnung der Hälfte der Weite oder eines Drittels der Länge der Lötfläche 14.

Die zugehörige Endfläche des Endes 5 ist über dessen gesamten Querschnitt durchgehend ebenfalls als durchgehend annähernd ebene Schrägfläche 17 mit einem Neigungswinkel von etwa 45° ausgebildet, so daß die Schrägflächen 16, 17 etwa parallel zueinander liegen. Durch die Schrägfläche 17 bildet das Ende 5 eine außermittig liegende Spitze, deren eine Flanke durch den Außenumfang des Mantels 5 gebildet ist. Von der Schrägfläche 17 bis zur Lötfläche 15 hat das Ende 3 durchgehend konstante Außenquerschnitte bzw. eine von Abstufungen freie Außenfläche.

Die der Lötverbindung 1 zugehörige Endfläche 20 des Endes 4 ist bis zu dessen Außenumfang durchgehend eben und liegt etwa rechtwinklig zur Achse 10 sowie in einem Abstand von der Lötfläche 14 bzw. der Schrägfläche 16, der größer als die Innenweite dieser ringscheibenförmigen Endfläche 20 ist bzw. etwa 4 mm beträgt. Der Abstand der Endfläche 20 von der Schrägfläche 16 bzw. der Ausrundung 18 kann dabei zwischen dem ein- und 6-fachen, insbesondere etwa das 4-fache der Weite der Lötfläche 14 oder zwischen dem ein- und 4-fachen, insbesondere etwas das 1,5-fache ihrer Innenweite betragen, wobei, jeweils ausgehend vom genannten Mindestmaß, jedes weitere ganzzahlige Vielfache möglich ist. Die Innenweite der Endfläche 20 entspricht der größten Innenweite der Ausrundung 18 bzw. der Innenweite des Bauteiles 2 im Bereich des auf der anderen Seite der Lötfläche 14 liegenden Längsabschnittes.

In Steckrichtung Pfeil 11 geht die Lötfläche 14 über eine Abrundung 22 in eine Schulterfläche 21 über. Die Abrundung 22 kann im wesentlichen so, wie anhand der Abrundung 19 beschrieben, ausgebildet sein, ist jedoch entgegengesetzt zu dieser gekrümmt. Die Schulterfläche 21 kann im wesentlichen so, wie anhand der Schrägfläche 16 beschrieben, ausgebildet sein, ist jedoch in entgegengesetzter Richtung konisch. An die Schulterfläche 21 schließt in Steckrichtung Pfeil 11 eine konkave Ausrundung 23 an, die im wesentlichen so, wie anhand der Ausrundung 18 beschrieben, ausgebildet sein kann, jedoch im Axialschnitt im entgegengesetzten Sinn gekrümmt ist. Die jeweilige Ausrundung 18, 19, 22, 23 bzw. die Schulterfläche 21 ist ebenfalls über ihren gesamten Umfang und ihre Axialerstreckung geschlossen, so daß das Innere des Endes 4 nur von einem oder beiden Enden des Bauteiles 2 her zugänglich ist.

Die Ausrundung 18 schließt an eine bis zur Endfläche 20 durchgehend konstante Abstände von der Achse 10 aufweisende, zylindrische Anschlußfläche 26 an, in die die Ausrundung 18 tangential bzw. glattflächig absatzfrei übergeht. Entsprechend schließt die Ausrundung 23 an eine ebenfalls durch die Innenfläche 12 gebildete Fortsetzungsfläche 27 an, die über die Endfläche des eingesetzten Endes 5 hinaus durchgehend parallel zur Achse 10 liegend zylindrisch und etwa von gleicher Weite wie die Anschlußfläche 26 ist. Die Axialerstreckung der Schrägfläche 16 einschließlich der zugehörigen Rundungen 18, 19 ist wesentlich kleiner als die Länge der Lötfläche 14, welche etwa 2- bis 5-fach, insbesondere etwa 3-fach länger ist, wobei, ausgehend von dem genannten Mindestmaß, jedes ganzzahlige Mehrfache denkbar ist. Dies gilt im wesentlichen auch für die Axialerstreckung der Schulterfläche 21 einschließlich der zugehörigen Rundungen 22, 23. Gegenüber der lichten Weite der Anschlußfläche 26 bzw. der Fortsetzungsfläche 27 ist die genannte Axialerstreckung 1/3 bis 1/8, insbesondere etwa 1/5 kleiner, während sie gegenüber der lichten Weite der Lötfläche 14 um etwa die Hälfte kleiner ist.

Die beschriebene, die Rundungen 18, 19 bzw. 22, 23, die Schräg- bzw. Schulterflächen 16, 21 und die Lötfläche 14 bildende Mantelprofilierung ergibt am Außenumfang des Endes 4 eine Vertiefung bzw. ringnutförmig über den gesamten Außenumfang durchgehende Taille 25 mit nach außen divergierenden Nutflanken, in deren Bereich der Bauteil 2 während der Herstellung der Lötverbindung axial und radial formschlüssig bzw. spielfrei gesichert in einer entsprechenden Vorrichtung bzw. mit einem Greifer so gehalten werden kann, daß der die Anschlußfläche 26 bildende Endabschnitt frei und ungehindert zugänglich vorsteht. Dieser Endabschnitt bildet somit einen gegenüber der Taille 25 erweiterten Endkopf von gleicher Außenweite wie der die Fortsetzungsfläche 27 bildende Längsabschnitt des Bauteiles 2. Am anderen Ende 28 ist der Bauteil 2 durch radial nach innen gerichtetes Hämmern und/oder Quetschen druckdicht geschlossen und gegenüber den anschließenden Längsabschnitten verengt. Die genannte Mantelprofilierung kann in vorteilhafter Weise durch Einführen mindestens eines entsprechend komplementär profilierten Dornes in das noch nicht verformte Ende 4 bzw. 28 hergestellt werden, gegen dessen Außenumfang dann der Mantel des Endes 4 von außen her so gehämmert wird, daß er die beschriebene Form annimmt.

Der Außenumfang des Mantels 29 des Endes 5 des Bauteiles 3 dient vor und während dessen Einstecken in das Ende 4 als Transporteur und Träger 31 für das Lötmittel 30. Dieses wird über den Umfang durchgehend und etwa gleichmäßig in einem Abstand von der End- bzw. Schrägfläche 17 als dünne Mantelschicht aufgetragen, der kleiner ist als das Maß, um welches das Ende 5 in bestimmungsgemäß eingesetztem Zustand nach innen über die Abrundung 19 vorsteht. Das Ende 5 wird dann einschließlich des Lötmittels 30 gegenüber der Anschlußfläche 26 vollständig berührungsfrei in das Ende 4 eingeführt, bis die Schrägfläche 17 bzw. die zugehörige Spitze auf der Ausrundung 18, der Schrägfläche 16 oder nur der Abrundung 19 aufläuft. Beim weiteren Einführen gleitet dadurch die Schrägfläche 17 bzw. die Spitze auf den folgenden Flächen, bis sie in die Lötfläche 14 gelangt. Erst nachdem die Schrägfläche 17 die Lötfläche 14 bei der Abrundung 22 wieder verlassen hat, nachdem somit die beiden Enden 4, 5 genau gegeneinander zentriert sind, kommt das vordere Ende der Mantelschicht des Lötmittels 30 in den Bereich der Abrundung 19. Diese bildet am Anfang der Lötfläche 14 einen Abstreifer, durch den das Lötmittel 30 unter Abstreifen vom Außenumfang des Endes 5 aufgehalten und gleichmäßig ringförmig um den Außenumfang des Endes 5 an der Abrundung 19 und im Bereich der Schrägfläche 16 abgelagert wird. Die Abrundung 19 bildet dabei mit dem Außenumfang des Endes 5 einen im Axialschnitt sich zur Lötfläche 14 verengenden Keilspalt, in den das Lötmittel in geringen Mengen durch die Steckbewegung bis zur Lötfläche 14 hineingezogen werden kann. Sobald die vorbestimmte Lötfläche 15 deckungsgleich mit der Lötfläche 14 liegt, ist der Einführvorgang beendet und die so vormontierte bzw. vorbereitete Baueinheit kann zur endgültigen Herstellung der Lötverbindung als Ganzes erwärmt werden.

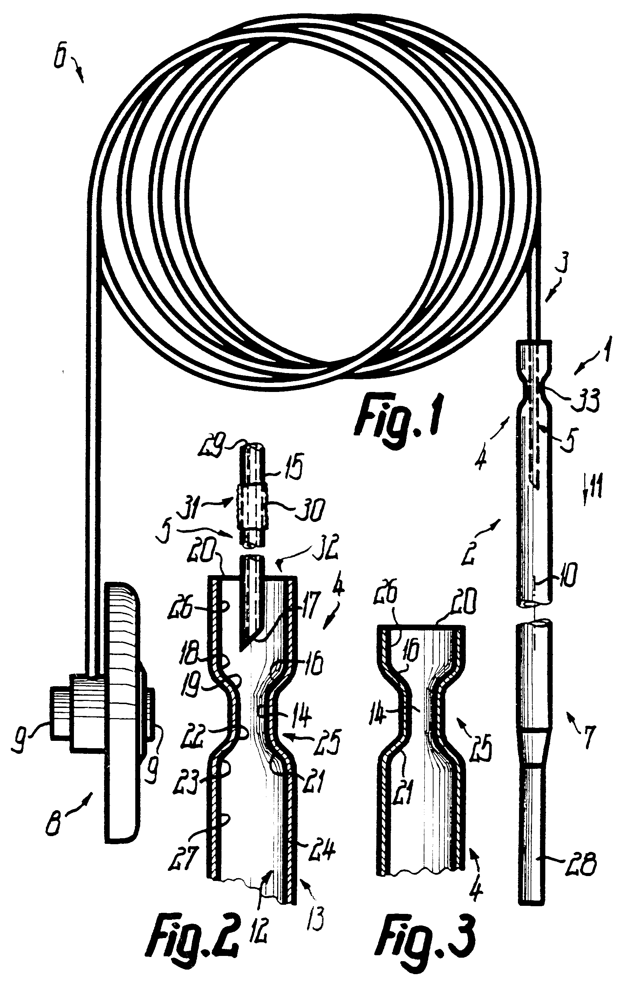

Die Ausführungsform nach Fig. 3 unterscheidet sich von derjenigen nach Fig. 2 im wesentlichen dadurch, daß die Anschlußfläche 26 wesentlich kürzer, nämlich höchstens so lang wie die Lötfläche 14 bzw. demgegenüber kürzer ist. Da die Innenweite der Anschlußfläche 26 und der Endfläche 20 gegenüber der Außenweite des Endes 5 bzw. des Lötmittels 30 beträchtlich größer ist, nämlich mindestens 1,5- bis 4-fach, vorzugsweise etwa 2,5-fach, bereitet das erste Einführen bzw. Ansetzen des Endes 5 am Ende 4 keinerlei Schwierigkeiten.

Der an die Lötstelle 33 bis zur Endfläche 20 anschließende Endabschnitt des äußeren Ende 4 bildet einen Biegeschutz 32 für denjenigen Abschnitt des Bauteiles 3, der sich von der Lötstelle 33 durch die Endfläche 20 nach außen erstreckt. Aus seiner koaxialen Lage kann der Bauteil 3 dadurch nach allen Richtungen um die Achse 10 gegenüber dem Bauteil 2 unter Verbiegen ausgelenkt werden, bis er am Innenumfang der Endfläche 20 bzw. an der Anschlußfläche 26 anschlägt. Durch die Abrundung 19 ist dabei ein Knicken des Bauteiles 3 an derjenigen Stelle vermieden, an der dieser Bauteil 3 aus der Lötstelle 33 frei austritt.

Ist ein das Rohr 3 wenigstens auf einem Teil seiner Länge umgebender Schutz- bzw. Isolierschlauch o.dgl. aus thermisch und/oder elektrisch isolierendem Material vorgesehen, so kann diese Hülle bis zu einem den Bauteil 8 und/oder Schaltkontakte aufnehmenden Gehäuse, wie einem Reglergehäuse, reichen. Der Schlauch kann im Bereich seines näher beim Bauteil 2 liegenden Endes im wesentlichen druckdicht gegen Eindringen flüssiger bzw. gasförmiger Medien geschlossen sein. Als Verschluß kann mindestens ein Teil bzw. Bereich der Verbindung 1 oder des Bauteiles 2 vorgesehen sein, z.B. der Außen- und/oder Innenumfang des zugehörigen Endes 4 oder eine bis alle der Flächen 26, 18, 16, 19. Das zugehörige Ende der Umhüllung kann durch Stecken mit seinem Umfang im wesentlichen radialspielfrei zentriert bzw. dicht in die Innenfläche 26 eingreifen. Auch kann die im Abstand von wenigstens einem Teil dieser äußeren Mantelfläche liegende Endfläche bzw. die innere und/oder äußere Endkante des Schlauchmantels gegen mindestens eine der Flächen 18, 16, 19 mit Längs- bzw. Radialpressung über den Umfang im wesentlichen gleichmäßig anstoßen und dadurch ggf. radial verengt bzw. gegen den Außenumfang des Endes 5 gepreßt sein. Beim Füllen des Ausdehnungssystems bzw. der Bauteile 2, 3, 8 mit Ausdehnungsflüssigkeit oder beim thermischen Justieren des Systems im Salzbad o.dgl. kann dann dieses Medium nicht in den Schlauch bzw. bis zum Gehäuse oder dessen Funktionsteilen vordringen und Störungen verursachen.

## Patentansprüche

1. Verbindung zwischen Bauteilen (2, 3), insbesondere zwischen mindestens einem Kapillar-Rohr und wenigstens einem Fühler-Rohr oder dgl., die unter Bildung mindestens einer Haft-Verbindungszone (33), wie eines kapillarwirksamen Lötspaltes, mit wenigstens einem äußeren Ende (4) eines zweiten Bauteiles (2) und mindestens einem inneren Ende (5) eines ersten Bauteiles (3) in wenigstens einer Steckrichtung (Pfeil 11) zusammengesetzt sind, von denen das äußere Ende (4) als der Verbindungszone (33) zugehörige Verbindungs- bzw. Lötfläche (14) wenigstens eine Innenfläche und das innere Ende (5) als zugehörige Verbindungs- bzw. Lötfläche (15) mindestens eine Außenfläche aufweist, wobei mindestens einem Ende (4, 5) der Bauteile (2, 3) als Steck- und Einfädelhilfe wenigstens eine zur Steckrichtung (Pfeil 11) geneigte Schrägfläche (16, 17) zugeordnet ist, dadurch gekennzeichnet, daß anschließend an die Verbindungszone (33) mindestens ein mit dem zweiten Bauteil (2) einteiliger Biegeschutz (32) mit einem im Abstand von der Verbindungsfläche (14, 15) liegenden Anschlag vorgesehen ist, gegenüber welchem der erste Bauteil (3) bei einer Biegung bis zur Anlage bewegbar ist und daß die Schrägfläche (16) des zweiten Bauteils (2) als Innenfläche und trichterförmig geneigt kegelstumpfförmig ausgebildet ist.

2. Verbindung nach Anspruch 1, dadurch gekennzeichnet, daß die Schrägfläche (16) unter etwa 45° zur Steckrichtung (Pfeil 11) bzw. zur zugehörigen Lötfläche (14) liegt.

3. Verbindung nach Anspruch 1 oder 2, dadurch gekennzeichnet, daß mindestens eine Schrägfläche (16) an wenigstens einem Ende kontinuierlich und abgerundet in mindestens eine etwa parallel zur Steckrichtung (Pfeil 11) anschließende Fläche (26, 14) übergeht, daß die anschließende Fläche abgerundet in ein von einer zugehörigen Lötfläche (14) entferntes Ende der Schrägfläche (16) übergeht und daß die Schrägfläche (16) abgerundet in die Lötfläche (14) übergeht bzw. daß die Schrägfläche (16, 17) im Querschnitt parallel zur Steckrichtung (Pfeil 11) im wesentlichen geradlinig ist.

4. Verbindung nach einem der vorhergehenden Ansprüche, dadurch gekennzeichnet, daß eine Schrägfläche (16) des jeweiligen Bauteiles (2) im wesentlichen bis an eine zugehörige Verbindungs- bzw. Lötfläche (14 bzw. 15) reicht, daß die Schrägfläche (16) als glatte Gleitfläche ausgebildet ist und daß mindestens eine Schrägfläche (16, 17) parallel zur Steckrichtung (Pfeil 11) bzw. in ihrer schrägen Längsrichtung eine gegenüber einer Lötfläche (14, 15) geringere Längserstreckung hat.

5. Verbindung nach einem der vorhergehenden Ansprüche, dadurch gekennzeichnet, daß mindestens eine Schrägfläche (16) mit einem von einer Lötfläche (14) entfernten Ende in wenigstens eine Anschlußfläche (26) übergeht, die gegenüber der Steckrichtung (Pfeil 11) weniger geneigt bis etwa parallel ist, daß die Anschlußfläche (26) zwischen mindestens so lang wie und etwa 3-fach länger als die Lötfläche (14, 15) ist bzw. daß die Anschlußfläche (26) zwischen etwa 2- bis 5-fach so lang wie die Schrägfläche (16) ist und daß die Anschlußfläche (26) als im wesentlichen geschlossene Mantelfläche ausgebildet ist.

6. Verbindung nach einem der vorhergehenden Ansprüche, dadurch gekennzeichnet, daß mindestens eine Schrägfläche (16) des jeweiligen Bauteiles (2) im Bereich der Innenseite eines äußeren Endes (4) vorgesehen ist, daß die Schrägfläche (16) einteilig mit wenigstens einer Anschlußfläche (26) ausgebildet ist und daß die Anschlußfläche (26) im Abstand von der Schrägfläche (16) durch eine zur Steckrichtung (Pfeil 11) etwa rechtwinklige Stirnfläche (26) begrenzt ist bzw. kontinuierlich bis an eine Endfläche (20) des zugehörigen Bauteiles (2) reicht.

7. Verbindung nach einem der vorhergehenden Ansprüche, dadurch gekennzeichnet, daß mindestens eine Schrägfläche (16, 17) einteilig mit der zugehörigen Lötfläche (14, 15) ausgebildet ist, daß wenigstens eine Schrägfläche (16, 17) durch eine rohrförmige Mantelwand gebildet ist und daß mindestens eine Lötfläche (14, 15) durchgehend etwa parallel zur Steckrichtung (Pfeil 11) liegt bzw. durchgehend glattflächig profilierungsfrei ist.

8. Verbindung nach einem der vorhergehenden Ansprüche, dadurch gekennzeichnet, daß mindestens eine Schrägfläche (16, 17) des jeweiligen Bauteils (2, 3) durch eine über ihre Länge im wesentlichen konstant dicke Blechwand gebildet ist, daß die Schrägfläche (16) bzw. eine Lötfläche (14) durch einen gegenüber einem anschließenden Abschnitt des zugehörigen Bauteiles (2) gefügeverdichteten Werkstoff gebildet ist und daß die Schrägfläche (16) bzw. eine Lötfläche (14) durch eine gehämmerte Oberfläche gebildet ist.

9. Verbindung nach einem der vorhergehenden Ansprüche, dadurch gekennzeichnet, daß mindestens eine Verbindungs- bzw. Lötfläche (14) im Abstand von wenigstens einer Schrägfläche (16) in mindestens eine Schulterfläche (21) übergeht, daß die Schulterfläche (21) gegenüber der Steckrichtung (Pfeil 11) etwa gleich große entgegengesetzte Neigung wie die Schrägfläche (16) aufweist und daß die Schulterfläche (21) im Abstand von der Schrägfläche (16) in eine Fortsetzungsfläche (27) im wesentlichen kontinuierlich übergeht, die zur Steckrichtung (Pfeil 11) etwa parallel liegt bzw. im Querschnitt mit einer Anschlußfläche (26) annähernd fluchtet.

10. Verbindung nach einem der vorhergehenden Ansprüche, dadurch gekennzeichnet, daß mindestens ein äußeres Ende (4) im Abstand von einer Endfläche (20) mit wenigstens einer taillenförmigen Verengung (25) versehen ist, daß die Verengung (25) am Außenumfang eine Ringnut mit mindestens einer schrägen Nutflanke bildet und daß die Verengung (25) am Innenumfang mit einem Ringwulst eine Lötfläche (14) bzw. eine Schrägfläche (16) bildet.

11. Verbindung nach einem der vorhergehenden Ansprüche, dadurch gekennzeichnet, daß mindestens eine Lötfläche (14, 15) kürzer als eine Außen- bzw. eine Innenweite wenigstens eines anschließenden Abschnittes eines äußeren Endes (4) ist, daß die Lötfläche (14, 15) etwa halb so lang wie eine Weite wenigstens eines anschließenden Abschnittes eines äußeren Endes (4) ist und daß mindestens eine Lötfläche (14, 15) durchgehend zylindrisch ist.

12. Verbindung nach einem der vorhergehenden Ansprüche, dadurch gekennzeichnet, daß mindestens eine Schrägfläche (17) des jeweiligen Bauteiles (3) durch eine Endfläche gebildet ist, daß die Schrägfläche (17) durch ein inneres Ende (5) gebildet ist und daß die Schrägfläche (17) durch eine durchgehend annähernd eben abgeschrägte bzw. gegenüber einer Lötfläche (14, 15) zugespitzte Fläche gebildet ist.

13. Verbindung nach einem der vorhergehenden Ansprüche, dadurch gekennzeichnet, daß mindestens eine Schrägfläche (16, 17) mit Zwischenabstand von wenigstens einer Lötfläche (14, 15) entfernt ist, daß die Schrägfläche (17) eines inneren Endes (5) mit Zwischenabstand von der zugehörigen Lötfläche (15) entfernt ist und daß der Zwischenabstand mindestens 4- bis 8-fach größer als die Länge der Lötfläche (14, 15) ist.

14. Verbindung nach einem der vorhergehenden Ansprüche, dadurch gekennzeichnet, daß mindestens eine äußere Fläche eines inneren Endes (5) des jeweiligen Bauteils (3) als Haft- und Transport-Tragfläche (31) für ein Verbindungsmittel (30), wie eine Lötpaste, ausgebildet ist, daß wenigstens ein Übergang (19) zwischen einer Schrägfläche (16) und einer Verbindungs- bzw. Lötfläche (14) eines äußeren Endes (4) des jeweiligen Bauteiles (2) als Abstreifer und ringförmiger Sammelspeicher für Verbindungsmittel (30) ausgebildet ist und daß die Transport-Tragfläche (31) näher bei einer Verbindungs- bzw. Lötfläche (15) als bei einer zugehörigen Endfläche (17) des inneren Endes (5) liegt.

15. Verbindung nach einem der vorhergehenden Ansprüche, dadurch gekennzeichnet, daß ein ein äußeres Ende (4) bildender Bauteil (2) mindestens über den mit einem innerne Ende (5) gemeinsamen Längsabschnitt außer im Bereich einer einzigen Verbindungs- bzw. Lötstelle (33) mit zugehöriger einziger Schrägfläche (16) und zugehöriger einziger Schulterfläche (21) konstante Innen- bzw. Außenquerschnitte aufweist, daß diese konstanten Querschnitte über ein Vielfaches der Länge des gemeinsamen Längsabschnittes durchgehen, daß das innere Ende (5) im Anschluß an wenigstens ein Ende der Verbindungs- bzw. Lötstelle (33) bis zur zugehörigen Endfläche (17 bzw. 20) im wesentlichen berührungsfrei innerhalb des äußeren Bauteils (2) liegt und daß wenigstens ein Bauteil (2, 3) einen im wesentlichen dichten Verschluß für eine Umhüllung bildet.

16. Verbindung nach einem der vorhergehenden Ansprüche, dadurch gekennzeichnet, daß der erste Bauteil (3) aus einer Mittellage gegenüber dem Biegeschutz (32) um etwa höchstens seine Querschnittsweite bis zum Anschlag quer bewegbar ist und daß der Biegeschutz (32) durch eine im wesentlichen an die Schrägfläche (16) anschließende Manschette bzw. einen Endabschnitt des zweiten Bauteils (2) gebildet ist, dessen Abschnitt eine Länge hat, die mindestens so groß wie seine Innenweite ist.

## Claims

1. A joint between components (2, 3), more particularly between at least one capillary tube and at least one sensor tube or the like, composed in forming at least one bonded joint zone (33), such as a capillary-effective solder gap, including at least one outer end (4) of a second component (2) and at least one inner end (5) of a first component (3) in at least one insertion direction (arrow 11), of which said outer end (4) as the jointing or solder surface area (14) belonging to the jointing zone (33) comprises at least one inner surface area and said inner end (5) as said jointing or solder surface area (15) belonging thereto comprises at least one outer surface area, at least one end (4, 5) of said components (2, 3) being assigned at least one slanting surface area (16,17) inclined to the direction of insertion (arrow 11) as an insertion or threading aid, characterized in that at least one bending guard (32) integral with said second component (2) is provided adjoining said jointing zone (33) including a stop located spaced away from said jointing surface area (14, 15), with respect to which said first component (3) is movable in being bent to a stop and that said slanting surface area (16) of said second component (2) is configured as an inner surface area in the form of an inclined funnel-shaped truncated cone.

2. The joint as set forth in claim 1, characterized in that said slanting surface area (16) is located at an angle of approximately 45° to the insertion direction (arrow 11) or to the associated solder surface area (14).

3. The joint as set forth in claim 1 or 2, characterized in that at least one slanting surface area (16) at at least one end translates smoothly rounded into at least one surface area (26, 14) adjoining roughly parallel to the insertion direction (arrow 11), that said adjoining surface area translates rounded into an end of said slanting surface area (16) remote from an associated solder surface area (14) and that said slanting surface area (16) translates rounded into said solder surface area (14) or that said slanting surface area (16,17) is substantially straight in cross-section parallel to the insertion direction (arrow 11).

4. The joint as set forth in any of the preceding claims, characterized in that a slanting surface area (16) of each component (2) extends substantially up into an associated jointing or solder surface area (14 and 15 resp.), that said slanting surface area (16) is configured as a smooth sliding surface area and that at least one slanting surface area (16,17) has parallel to the insertion direction (arrow 11) or in its slanting longitudinal direction an elongation less than that of a solder surface area (14, 15).

5. The joint as set forth in any of the preceding claims, characterized in that at least one slanting surface area (16) translates by one end remote from said solder surface area (14) into at least one contact surface area (26) oriented less slanting or roughly parallel to the insertion direction (arrow 11), that said contact surface area (26) is between at least as long as and three-times as long as said solder surface area (14, 15) or that said contact surface area (26) is between approximately two to five-times as long as said slanting surface area (16) and that said contact surface area (26) is configured as a substantially closed shell surface area.

6. The joint as set forth in any of the preceding claims, characterized in that at least one slanting surface area (16) of each component (2) is provided in the region of the inner side of an outer end (4), that said slanting surface area (16) is configured integrally with at least one contact surface area (26) and that said contact surface area (26) is defined spaced away from said slanting surface area (16) by a face surface area (20) oriented roughly at right angles to the insertion direction (arrow 11) or extends continuously up to one end surface area (20) of the associated component (2).

7. The joint as set forth in any of the preceding claims, characterized in that at least one slanting surface area (16, 17) is configured integrally with the associated solder surface area (14, 15), that at least one slanting surface area (16, 17) is formed by a tubular shell wall and that at least one solder surface area (14, 15) is located throughout roughly parallel to the insertion direction (arrow 11) or is smooth-surfaced throughout free of profiles.

8. The joint as set forth in any of the preceding claims, characterized in that at least one slanting surface area (16,17) of each component (2, 3) is formed by a sheet metal wall substantially constant in thickness over its length, that said slanting surface area (16) or a solder surface area (14) is formed by material of a more dense consistency than an adjoining section of the associated component (2) and that said slanting surface area (16) or a solder surface area (14) is formed by a hammered surface finish.

9. The joint as set forth in any of the preceding claims, characterized in that at least one jointing or solder surface area (14) translates spaced away from at least one slanting surface area (16) into at least one shoulder surface area (21), that said shoulder surface area (21) comprises roughly the same inclination as said slanting surface area (16) to the insertion direction (arrow 11) and that said shoulder surface area (21) translates spaced away from said slanting surface area (16) into a continuation surface area (27) substantially continuously located roughly parallel to the insertion direction (arrow 11) or cross-sectionally approximately in line with a contact surface area (26).

10. The joint as set forth in any of the preceding claims, characterized in that at least one outer end (4) is provided spaced away from an end surface area (20) with at least one waisted constriction (25), that said constriction (25) forms at the outer circumference an annular groove with at least one slanting groove flank and that said constriction (25) forms at the inner circumference with an annular bead a solder surface area (14) or a slanting surface area (16).

11. The joint as set forth in any of the preceding claims, characterized in that at least one solder surface area (14, 15) is shorter than an outer or inner width of at least one adjoining section of an outer end (4), that said solder surface area (14, 15) is roughly half as long as a width of at least one adjoining section of an outer end (4) and that at least one solder surface area (14, 15) is cylindrical throughout.

12. The joint as set forth in any of the preceding claims, characterized in that at least one slanting surface area (17) of each component (3) is formed by an end surface area, that said slanting surface area (17) is formed by an inner end (5) and that said slanting surface area (17) is formed by a full-length approximately flat surface area slanted or tapered as compared to said solder surface area (14, 15).

13. The joint as set forth in any of the preceding claims, characterized in that at least one slanting surface area (16, 17) is remote by an intermediate spacing from at least one solder surface area (14, 15), that said slanting surface area (16,17) of an inner end (5) is remote by an interspace from said associated solder surface area (15) and that said interspace is at least four to eight-times larger than the length of said solder surface area (14, 15).

14. The joint as set forth in any of the preceding claims, characterized in that at least one outer surface area of an inner end (5) of each component (3) is configured as a bonding and transport supporting surface area (31) for a jointing agent (30), such as a solder paste, that at least one transition (19) between a slanting surface area (16) and a jointing or solder surface area (14) of an outer end (4) of each component (2) is configured as a wiper and annular accumulator for said jointing agent (30) and that said transport supporting surface area (31) is located nearer to a jointing or solder surface area (15) than to an associated end surface area (17) of said inner end (5).

15. The joint as set forth in any of the preceding claims, characterized in that a component (2) forming an outer end (4) comprises at least over the longitudinal section in conjunction with an inner end (5), except in the region of a sole jointing or solder point (33) with an associated sole slanting surface area (16) and associated sole shoulder surface area (21), constant inner or outer cross-sections, that these constant cross-sections extend over a multiple of the length of said common longitudinal section, that said inner end (5) adjoining at least one end of said jointing or solder point (33) is located up to the associated end surface area (17 and 20 resp.) substantially without contact within said outer component (2) and that at least one component (2, 3) forms a substantially sealed closure for a sleeve.

16. The joint as set forth in any of the preceding claims, characterized in that said first component (3) is transversely movable from a middle position relative to said bending guard (32) by approximately its cross-sectional width at the most up to the stop and that said bending guard (32) is formed by a cuff or an end section of said second component (2) adjoining substantially said slanting surface area (16), the section of said second component (2) being at least as long as its inner width is large.

## Revendications

1. Raccordement entre des éléments de construction (2, 3), notamment au moins entre un tube capillaire et au moins un tube d'un senseur ou similaire, lesquels sont assemblés, sous formation au moins d'une zone de raccordement par adhérence (33), tel qu'une fente de brasage à action capillaire, avec au moins une extrémité extérieure (4) d'un deuxième élément de construction (2) et au moins une extrémité intérieure (5) d'un premier élément de construction (3) dans au moins une direction d'enfichage (flèche 11), dont l'extrémité extérieure (4) présente, en tant que surface de raccordement ou encore de brasage (14) appartenant à la zone de raccordement (33), au moins une surface intérieure et l'extrémité intérieure (5) présente, en tant que surface de raccordement ou encore de brasage (15) correspondante, au moins une surface extérieure, au moins une surface oblique (16, 17) inclinée en direction d'enfichage (flèche 11) étant associée au moins à une extrémité (4, 5) des éléments de construction (2, 3) en tant que aide d'enfichage et d'enfilage, caractérisé en ce qu'à la suite de la zone de raccordement (33) au moins un moyen de protection à la flexion (32) est prévu en une seule pièce avec le deuxième élément de construction (2) avec une butée située avec un écart de la surface de raccordement (14, 15), par rapport à laquelle le premier élément de construction (3) est mobile dans le cas d'une flexion jusqu'au contact et en ce que la surface oblique (16) du deuxième élément de construction (2) est réalisée en forme tronconique en tant que surface intérieure et de manière inclinée en forme d'entonnoir.

2. Raccordement d'après la revendication 1, caractérisé en ce que la surface oblique (16) se trouve approximativement sous un angle de 45° par rapport à la direction d'enfichage (flèche 11) ou encore par rapport à la correspondante surface de brasage (14).

3. Raccordement d'après la revendication 1 ou 2, caractérisé en ce qu'au moins une surface oblique (16) passe, au moins à une extrémité, de manière continue et arrondie à au moins une surface (26, 14), qui fait suite approximativement de manière parallèle à la direction d'enfichage (flèche 11), en ce que la surface suivante passe de manière arrondie à une extrémité éloignée de la correspondante surface de brasage (14), de la surface oblique (16) et en ce que la surface oblique (16) passe de manière arrondie à la surface de brasage (14) ou encore en ce que la surface oblique (16, 17) est essentiellement rectiligne en section transversale parallèlement à la direction d'enfichage (flèche 11).

4. Raccordement d'après une des revendications précédentes, caractérisé en ce qu'une surface oblique (16) du respectif élément de construction (2) s'étend essentiellement jusqu'à une correspondante surface de raccordement ou encore de brasage (14 ou encore 15), en ce que la surface oblique (16) est réalisée en tant que surface de glissement lisse et en ce qu'au moins une surface oblique (16, 17) présente, parallèlement à la direction d'enfichage (flèche 11) ou encore en direction longitudinale oblique une étendue longitudinale plus petite par rapport à une surface de brasage (14, 15).

5. Raccordement d'après une des revendications précédentes, caractérisé en ce qu'au moins une surface oblique (16) passe, avec une extrémité éloignée d'une surface de brasage (14), à une surface de raccordement (26) au moins, laquelle est moins inclinée jusqu'à approximativement parallèle par rapport à la direction d'enfichage (flèche 11), en ce que la surface de raccordement (26) est au moins aussi longue jusqu'à approximativement 3 fois plus longue par rapport à la surface de brasage (14, 15) ou encore en ce que la surface de raccordement (26) est de 2 à 5 fois aussi longue que la surface oblique (16) et en ce que la surface de raccordement (26) est réalisée en tant que surface d'enveloppe essentiellement close.

6. Raccordement d'après une des revendications précédentes, caractérisé en ce qu'au moins une surface oblique (16) du respectif élément de construction (2) est prévue dans le domaine de la face intérieure d'une extrémité extérieure (4), en ce que la surface oblique (16) est réalisée en une seule pièce avec au moins une surface de raccordement (26) et en ce que la surface de raccordement (26) est délimitée avec un écart de la surface oblique (16) par une surface frontale (20) approximativement orthogonale par rapport à la direction d'enfichage (flèche 11) ou encore qu'elle s'étend de manière continue jusqu'à une surface terminale (20) de l'élément de construction (2) respectif.

7. Raccordement d'après une des revendications précédentes, caractérisé en ce qu'au moins une surface oblique (16, 17) est réalisée en une seule pièce avec la correspondante surface de brasage (14, 15), en ce qu'au moins une surface oblique (16, 17) est formée par une paroi d'enveloppe en forme de tube et en ce qu'au moins une surface de brasage (14, 15) est située sans interruption de manière plus ou moins parallèle à la direction d'enfichage (flèche 11) ou encore qu'elle est libre sans interruption de profilage avec une surface lisse.

8. Raccordement d'après une des revendications précédentes, caractérisé en ce qu'au moins une surface oblique (16, 17) de l'élément de construction (2, 3) respectif est formée par une paroi en tôle d'épaisseur essentiellement constante sur la longueur, en ce que la surface oblique (16) ou encore une surface de brasage (14) est formée par un matériau de structure densifiée par rapport à une section suivante du correspondant élément de construction (2) et en ce que la surface oblique (16) ou encore une surface de brasage (14) est formée par une surface martelée.

9. Raccordement d'après une des revendications précédentes, caractérisé en ce qu'au moins une surface de raccordement ou encore de brasage (14) passe, avec un écart d'au moins une surface oblique (16), à une surface d'épaulement (21) au moins, en ce que la surface d'épaulement (21) présente par rapport à la direction d'enfichage (flèche 11) approximativement la même inclinaison mais opposée que la surface oblique (16) et en ce que la surface d'épaulement (21) passe, avec un écart de la surface oblique (16), de manière essentiellement continue à une surface de continuation (27), laquelle se trouve approximativement parallèle par rapport à la direction d'enfichage (flèche 11) ou encore qui est approximativement alignée en section transversale avec une surface de raccordement (26).

10. Raccordement d'après une des revendications précédentes, caractérisé en ce qu'au moins une extrémité extérieure (4) est munie avec un écart d'une surface terminale (20) d'au moins un rétrécissement (25) en forme de taille, en ce que le rétrécissement (25) forme à la circonférence extérieure une gorge annulaire avec au moins un flanc de gorge oblique et en ce que le rétrécissement (25) forme à la circonférence intérieure avec un bourrelet annulaire une surface de brasage (14) ou encore une surface oblique (16).

11. Raccordement d'après une des revendications précédentes, caractérisé en ce qu'au moins une surface de brasage (14, 15) est plus courte qu'une ampleur extérieure ou encore intérieure d'une section au moins qui fait suite à une extrémité extérieure (4), en ce que la surface de brasage (14, 15) est approximativement de moitié moins longue que l'ampleur d'au moins une section qui fait suite à une extrémité extérieure (4) et en ce qu'au moins une surface de brasage (14, 15) est cylindrique sans interruption.

12. Raccordement d'après une des revendications précédentes, caractérisé en ce qu'au moins une surface oblique (17) de l'élément de construction (3) respectif est formée par une surface terminale, en ce que la surface oblique (17) est formée au moyen d'une extrémité intérieure (5) et en ce que la surface oblique (17) est formée au moyen d'une surface chanfreinée de manière approximativement plane sans interruption ou encore appointie par rapport à une surface de brasage (14, 15).

13. Raccordement d'après une des revendications précédentes, caractérisé en ce qu'au moins une surface oblique (16, 17) est éloignée avec un écart intermédiaire d'au moins une surface de brasage (14, 15), en ce que la surface oblique (17) d'une extrémité intérieure (5) est éloignée avec un écart intermédiaire de la correspondante surface de brasage (15) et en ce que l'écart intermédiaire est au moins de 4 à 8 fois plus grand de la longueur de la surface de brasage (14, 15).

14. Raccordement d'après une des revendications précédentes, caractérisé en ce qu'au moins une surface extérieure d'une extrémité intérieure (5) de l'élément de construction (3) respectif est réalisée en tant que surface de support d'adhérence et de transport (31) pour un moyen d'assemblage (30), tel qu'une pâte à braser, en ce qu'au moins un domaine de transition (19) est réalisé entre une surface oblique (16) et une surface de raccordement ou encore de brasage (14) d'une extrémité extérieure (4) de l'élément de construction (2) respectif en tant que racloir et réservoir d'accumulation annulaire pour le moyen d'assemblage (30) et en ce que la surface de support pour le transport (31) se trouve plus proche d'une surface de raccordement ou encore de brasage (15) que d'une surface terminale (17) correspondante de l'extrémité intérieure (5).

15. Raccordement d'après une des revendications précédentes, caractérisé en ce qu'un élément de construction (2) qui forme une extrémité extérieure (4) présente au moins le long de la section longitudinale en commun avec une extrémité intérieure (5), sauf que pour le domaine d'un seul point de raccordement ou encore de brasage (33) avec la seule correspondante surface oblique (16) et la seule correspondante surface d'épaulement (21) des sections transversales intérieures ou encore extérieures constantes, en ce que ces sections transversales constantes s'étendent sur une longueur considérablement plus grande par rapport à la longueur de la section longitudinale en commun, en ce que l'extrémité intérieure (5) se trouve, à la suite d'au moins une extrémité du point de raccordement ou encore de brasage (33) jusqu'à la correspondante surface terminale (17 ou encore 20), essentiellement sans contact à l'intérieur de l'élément de construction (2) extérieur et en ce qu'au moins un élément de construction (2, 3) forme une occlusion essentiellement étanche pour un enveloppement.

16. Raccordement d'après une des revendications précédentes, caractérisé en ce que le premier élément de construction (3) est transversalement mobile jusqu'à la butée par rapport au moyen de protection à la flexion (32) hors de sa position médiane d'une valeur correspondant approximativement au plus à son ampleur de section transversale et en ce que le moyen de protection à la flexion (32) est formé par une manchette, qui fait essentiellement suite à la surface oblique (16), ou encore par une section terminale du deuxième élément de construction (2), dont la section présente une longueur au moins aussi grande que son ampleur intérieure.
